# EUROPÄISCHE PATENTSCHRIFT

(11) **EP 0 492 122 B1**
(45) Veröffentlichungstag und Bekanntmachung des Hinweises auf die Patenterteilung: **25.08.1993**
(21) Anmeldenummer: 91119578.2
(22) Anmeldetag: 16.11.1991
(51) Int. Cl.: F02B 27/02

(54) **Luftansauganlage für eine Brennkraftmaschine**
Air-intake system for an internal combustion engine
Système d'admission d'air pour un moteur à combustion interne

(30) Priorität: 21.12.1990 DE 4041200
(43) Veröffentlichungstag der Anmeldung: 01.07.1992
(73) Patentinhaber: Dr.Ing.h.c. F. Porsche Aktiengesellschaft, 70435 Stuttgart (DE)
(72) Erfinder: Brüstle, Claus, Dipl.-Ing., W-7258 Heimsheim (DE); Krebs, Winfried, Dipl.-Ing. (FH), W-7140 Ludwigsburg (DE)

(56) Entgegenhaltungen:
- EP-A- 0 382 596
- DE-A- 3 820 674
- DE-A- 3 843 690
- GB-A- 2 239 899
- US-A- 4 890 586
- PATENT ABSTRACTS OF JAPAN vol. 7, no. 291 (M-265)(1436) 27. Dezember 1983 & JP-A-58 162724 (TOYOTA) 27. September 1983
- PATENT ABSTRACTS OF JAPAN vol. 14, no. 583 (M-106)26. Dezember 1990 & JP-A-2 252 918 (YAHAMA) 11. Oktober 1990

## Beschreibung

Die Erfindung betrifft eine Luftansauganlage für eine Brennkraftmaschine gemäß dem Oberbegriff des Patentanspruchs 1.

Aus der DE- 38 20 674 Al ist eine Luftansauganlage bekannt, in der die Länge von Einzelsaugrohren kontinuierlich durch das teleskopartige Ein- bzw. Ausfahren von in feststehenden Einlaßkrümmern geführten Rohrkrümmern variiert werden kann. Bei einer niedrigen Drehzahl der Brennkraftmaschine weisen diese Einzelsaugrohre ihre maximale Länge auf. Ihre Eintrittsöffnungen liegen dabei an einer Innenwandung eines die Rohrkrümmer umgebenden Saugverteilers an, der in dieser Stellung den Einzelsaugrohren über ein an den Saugverteiler angeschlossenes Rohr Luft zuführt. Bei steigender Drehzahl werden die Rohrkrümmer in die Einlaßkrümmer geschwenkt, so daß die Eintrittsöffnungen von der Innenwandung abheben und die Einzelsaugrohre direkt aus dem Saugverteiler ansaugen.

Der Erfindung liegt die Aufgabe zugrunde, eine Luftansauganlage für eine Brennkraftmaschine zu schaffen, bei der die Länge der die Luft zu den Zylindern führenden Rohre in einfacher Weise variiert werden soll. Dabei soll ein möglichst geringer Bauraum beansprucht werden und eine einfache Montage möglich sein.

Die Lösung dieser Aufgabe gelingt mit den Merkmalen des Patentanspruchs 1. Weitere, die Erfindung vorteilhaft ausgestaltende Merkmale sind in den Unteransprüchen enthalten.

Die freiliegende Anordnung von Rohrkrümmern auf einer ortsfesten Welle, die in zwei Stellungen schwenkbar ist, gestattet in einer Stellung die Ankopplung der Rohrkrümmer an die Einlaßkrümmer durch eine einfache Schwenkbewegung, durch die der von der Luft zurückgelegte Ansaugweg verändert wird. In der ersten Stellung liegt eine Austrittsöffnung des Rohrkrümmers unmittelbar an einer Eintrittsöffnung eines Einlaßkrümmers, so daß der Ansaugweg von dem Luftsammler zu Zylindern der Brennkraftmaschine aus der Hintereinanderschaltung von Einlaß- und Rohrkrümmer gebildet wird. In einer zweiten Stellung sind die beiden Öffnungen beabstandet zueinander angeordnet, infolge dessen saugen die Einlaßkrümmer direkt aus dem Luftsammler.
Die Schwenkbewegung erfordert eine geringe Stellkraft, da die Welle die den Rohrkrümmern zugeordneten Lager nahezu im Massenschwerpunkt der Rohrkrümmer durchdringt, die Rohrkrümmer kippen dabei lediglich um ihren Schwerpunkt. Das Massenträgheitsmoment ist dadurch minimiert, das die Schwenkbewegung auslösende Stellelement kann klein dimensioniert werden. Die von dem Stellelement zu überwindende Reibung wird lediglich durch die in den die Welle haltenden Lagerböcken auftretende Reibung bestimmt, da die Rohrkrümmer selbst in keinerlei Führungshülsen reibungsbehaftet gelagert sind.

Von den Ansaugtakten der Brennkraftmaschine verursachte sowie durch mechanische Anregung übertragene Schwingungen wirken nur geringfügig auf die Rohrkrümmer ein, da sie mittels der Welle nur an wenigen Punkten mechanisch an den Luftsammler gekoppelt sind und diese Welle in einer Trennebene gelagert ist, die nur gerinfügige Kippbewegungen um die Längsachse der Welle ausführt. Momente werden nicht auf die Welle übertragen.

Die Ausbildung der an die Einlaßkrümmer koppelbaren Rohre als Rohrkrümmer und ein eng benachbart der Rohrkrümmer verlaufender Deckel ermöglicht einen geringen Bauraum. Dieses führt mit den zuvor genannten Vorteilen dazu, daß diese Luftansauganlage in verschiedenen Einbaulagen an verschiedenen Brennkraftmaschinen eingesetzt werden kann. Die Trennebene zwischen den Gehäuseteilen des Luftsammlers kann bezüglich ihrer Lage gegenüber der Brennkraftmaschine horizontal oder senkrecht bzw. in einer dazwischenliegenden Stellung verlaufen. Weiterhin kann diese Luftansauganlage an Brennkraftmaschinen mit reihenförmiger oder V-förmiger Zylinderanordnung verwendet werden.

Da der Luftsammler im wesentlichen aus lediglich zwei Gehäuseteilen besteht, in deren Trennebene die Welle in einstückig mit Außenwandungen dieser Gehäuseteile ausgebildeten Lagerböcken gehalten ist, ist eine rasche, einfache Montage bzw. Demontage dieser Luftansauganlage möglich.

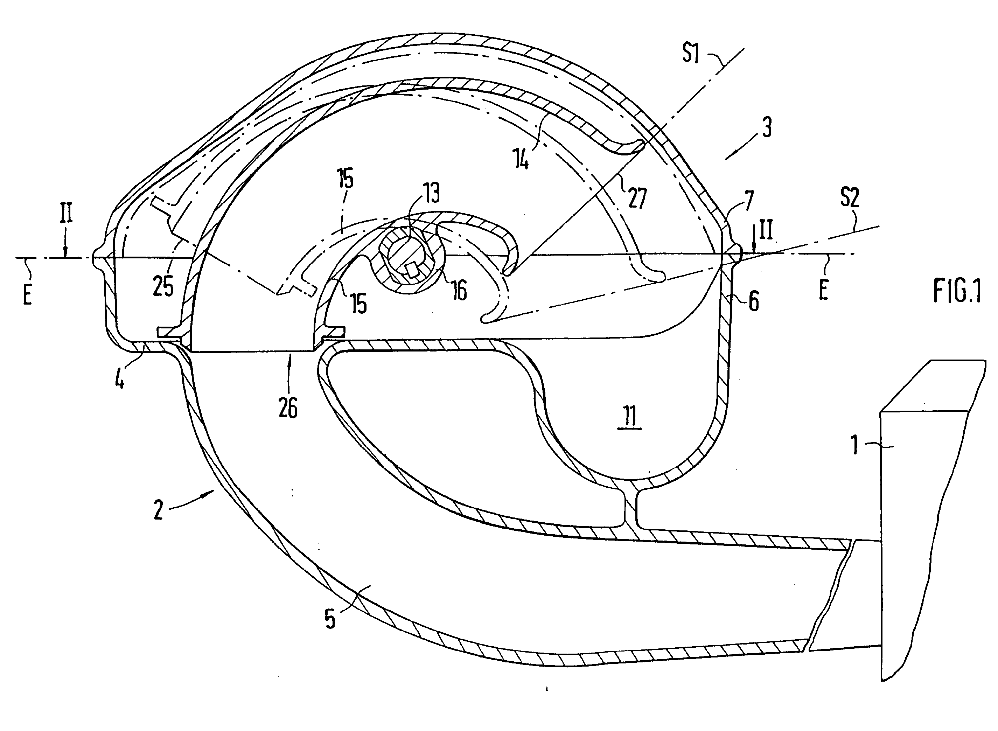

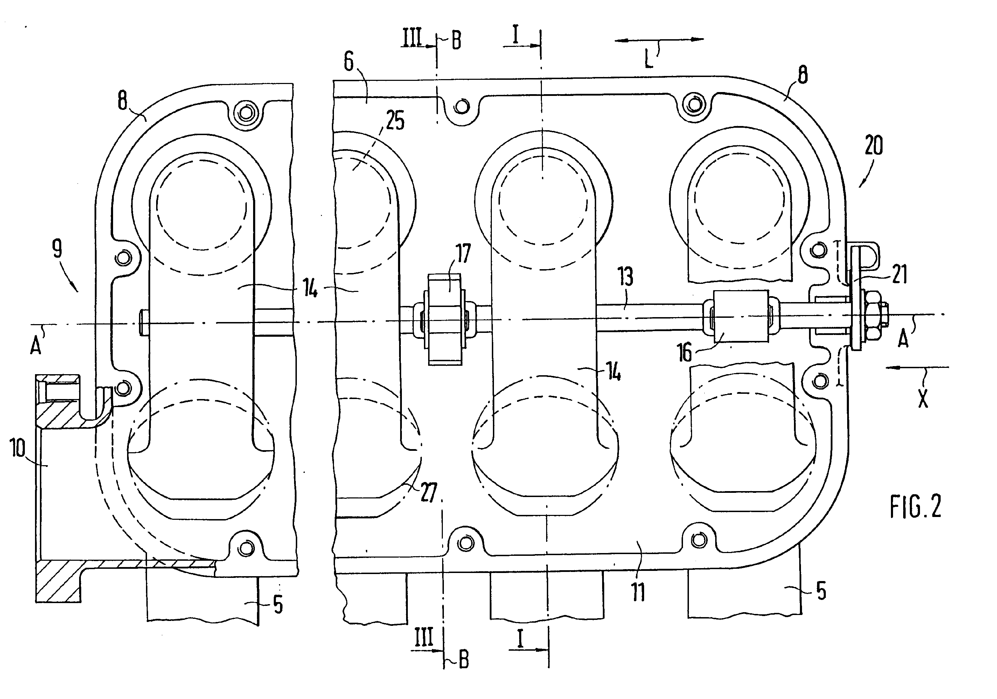

Die Erfindung wird anhand von Figuren beispielhaft erläutert.
Es zeigen
- Fig. 1: einen Schnitt entlang der Linie I-I gemäß der Fig. 2,
- Fig. 2: einen Schnitt entlang der Linie II-II gemäß Fig. 1,
- Fig. 3: einen Schnitt entlang der Linie III-III gemäß Fig. 2 und

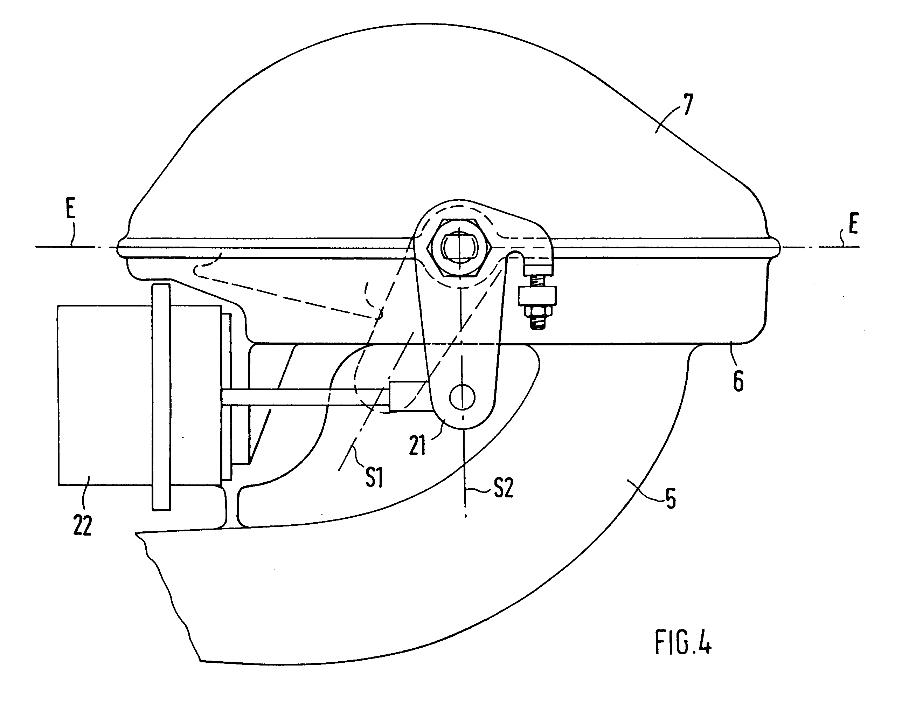

- Fig. 4: eine Ansicht aus Pfeilrichtung X gemäß Fig. 2.

Einer nicht näher gezeigten, mehrzylindrigen Reihen-Brennkraftmaschine mit einem Zylinderkopf 1 wird mittels einer Luftansauganlage 2 Luft für den Verbrennungsprozeß zugeführt. Die Luftansauganlage 2 umfaßt einen Luftsammler 3, der mittels in eine Außenwandung 4 mündende Einlaßkrümmer 5 an einzelne Zylinder der Brennkraftmaschine angeschlossen ist. Der Luftsammler 3 besteht im wesentlichen aus zwei Gehäuseteilen, einem Unterteil 6 und einem Deckel 7, wobei die Außenwandung 4 Teil des Unterteils 6 ist. Beide Gehäuseteile sind mittels Flanschflächen 8 in einer Trennebene E lösbar miteinander verbunden.

An einem Ende 9 der Luftansauganlage 2 ist eine mit einem nicht gezeigten Luftfilter verbundene Eintrittsöffnung 10 angeordnet. Diese Eintrittsöffnung 10 liegt auf der den Einlaßkrümmern 5 zugewandten Seite der Trennebene E und mündet innerhalb des Unterteils 6 in eine einstückig mit dem Unterteil 6 ausgebildete, sich in eine Längsrichtung L erstreckenden, wannenförmigen Ausbuchtung 11.

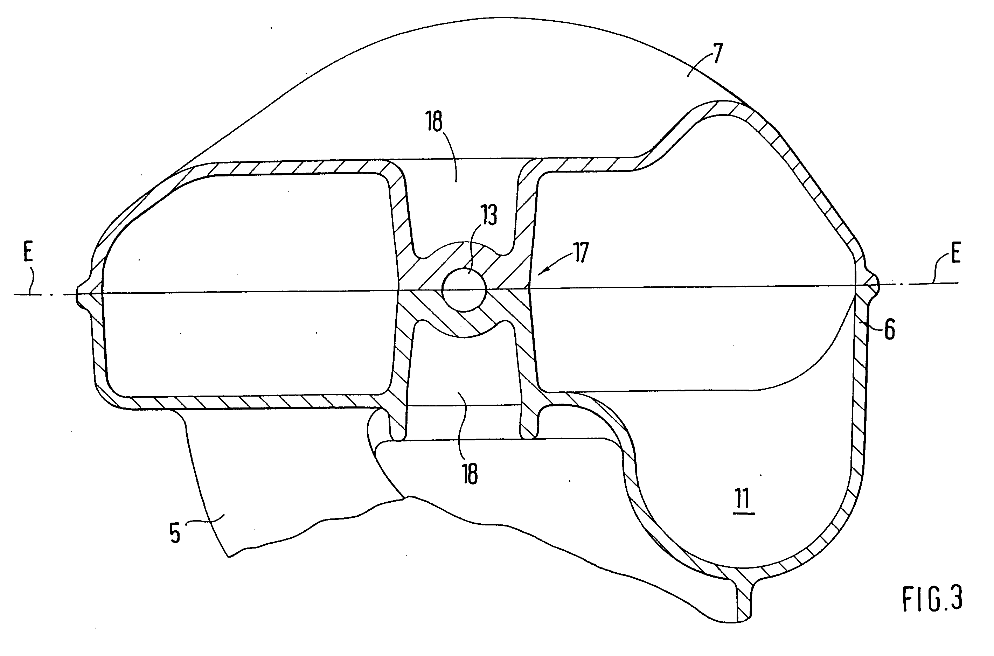

Innerhalb des Luftsammlers 3 ist eine in der Trennebene E liegende, um ihre Längsachse A verdrehbare Welle 13 gehalten. Auf dieser Welle 13 sind Rohrkrümmer 14 mit unmittelbar an einer Rohrkrümmerwandung 15 angeordneten Lagern 16 befestigt. Die Welle 13 ist in Lagerböcken 17 abgestützt, die in senkrecht zu der Trennebene E und der Längsachse A zwischen den Rohrkrümmern 14 verlaufenden Ebenen B angeordnet sind. Diese Lagerböcke 17 werden gemäß Fig. 3 durch von den Außenwandungen der Gehäuseteile bis auf die Trennebene E reichenden Einzügen 18 gebildet. An der dem Ende 9 gegenüberliegenden Seite 20 ist die Welle 13 aus dem Luftsammler 3 herausgeführt und mit einem drehfesten Hebel 21 versehen. An diesem Hebel 21 greift ein als Druckdose 22 ausgebildetes Betätigungselement an, welches an dem Unterteil 6 gehalten ist.

Im Betrieb der Brennkraftmaschine mit niedriger Last und/oder Drehzahl sind der Hebel 21 und damit auch die Rohrkrümmer 14 in eine erste Stellung S1 geschwenkt. Eine Austrittsöffnung 25 der Rohrkrümmer 14 liegt dabei unmittelbar an einer Eintrittsöffnung 26 eines Einlaßkrümmers 5 an, was in ausgezogenen Linien dargestellt ist. Die Ansaugluft wird von der Eintrittsöffnung 10 aus entlang der Ausbuchtung 11 in den Luftsammler 3 geführt und tritt über Eintrittsquerschnitte 27 in die Rohrkrümmer 14 ein. Die aus Einlaßkrümmer 5 und Rohrkrümmer 14 gebildete Länge des Ansaugweges ist so groß, daß eine gute Füllung der Brennkraftmaschine in diesem Drehzahlbereich erzielt wird.

Erreicht die Brennkraftmaschine eine bestimmte Drehzahl, z. B. 4000 1/min., so verschwenkt die Druckdose 22 den Hebel 21 und damit kippen die Rohrkrümmer 14 in eine zweite Stellung S2. Die Austrittsöffnung 25 liegt nun entfernt der Eintrittsöffnung 26, was in gestrichelten Linien dargestellt ist und die Ansaugluft gelangt unmittelbar aus dem Luftsammler 3 in die Einlaßkrümmer 5. Dieser verkürzte Ansaugweg erzielt eine für diesen Drehzahlbereich gute Füllung und optimiert dadurch den Drehmomentverlauf.

Bei Verwendung an einer Brennkraftmaschine mit V-förmiger Zylinderanordnung kann der Luftsammler 2 nahezu mittig zwischen den Zylinderreihen angeordnet sein. Dabei führen jeweils benachbarte Einlaßkrümmer 5 zu der einen bzw. zu der zweiten Zylinderreihe. In einer anderen Ausführungsform kann das Unterteil 6 zwei parallel zueinander verlaufende Ausbuchtungen 11 aufweisen, an die sich kreuzende Einlaßkrümmer 5 angeschlossen sind, die zu je einer Zylinderreihe führen. Hierbei sind zwei parallel oder koaxial zueinander angeordnete Wellen 13 vorgesehen, die jeweils von einem oder einem gemeinsamen Stellelement verschwenkt werden. Je eine Welle 13 ist dabei mit den darauf angeordneten Rohrkrümmern 14 einer Zylinderreihe zugeordnet.

## Patentansprüche

1. Luftansauganlage (2) für eine mehrzylindrige Brennkraftmaschine welche Luftansauganlage mindestens einen Luftsammler (3) aufweist, der mittels in eine Außenwandung (4) mündende Einlaßkrümmer (5) an einzelne Zylinder der Brennkraftmaschine anschließbar ist und mit innerhalb des Luftsammlers (3) angeordneten Rohrkrümmern (14), dadurch gekennzeichnet, daß die Rohrkrümmer (14) im Luftsammler (13) auf einer ortsfesten Welle (13) freiliegend in Stellungen (S1 und S2) verschwenkbar gehalten sind und in der einen Stellung (S1) eine Austrittsöffnung (25) des Rohrkrümmers (14) unmittelbar an einer Eintrittsöffnung (26) des Einlaßkrümmers (5) anliegt.

2. Ansauganlage nach Anspruch 1, dadurch gekennzeichnet, daß in der anderen Stellung (S2) die Austrittsöffnung (25) beabstandet zu der Eintrittsöffnung (26) angeordnet ist.

3. Ansauganlage nach Anspruch 1, dadurch gekennzeichnet, daß der Luftsammler (3) eine Trennebene (E) aufweist, in der eine Längsachse (A) der Welle (13) liegt.

4. Ansauganlage nach Anspruch 3, dadurch gekennzeichnet, daß die Rohrkrümmer (14) mit unmittelbar an einer Rohrkrümmerwandung (15) angeordneten Lagern (16) auf der Welle (13) gehalten sind.

5. Ansauganlage nach Anspruch 3, dadurch gekennzeichnet, daß die Welle (13) in an die Trennebene (E) grenzenden Lagerböcken (17) gehalten ist, die in senkrecht zu der Trennebene (E) und zu der Längsachse (A) zwischen benachbarten Rohrkrümmern (14) verlaufenden Ebenen (B) angeordnet sind.

6. Ansauganlage nach Anspruch 5, dadurch gekennzeichnet, daß die Lagerböcke (17) durch von den Außenwandungen des Luftsammlers (3) bis auf die Trennebene (E) reichenden Einzügen (18) gebildet sind.

7. Ansauganlage nach Anspruch 3, dadurch gekennzeichnet, daß der Luftsammler (3) im wesentlichen aus Gehäuseteilen (Unterteil 6, Deckel 7) besteht, die mittels Flanschflächen (8) an die Trennebene (E) grenzen.

8. Ansauganlage nach Anspruch 7, dadurch gekennzeichnet, daß der Deckel (7) unmittelbar benachbart der Rohrkrümmer (14) verläuft.

9. Ansauganlage nach Anspruch 1, dadurch gekennzeichnet, daß die Rohrkrümmer (14) die Welle (13) zumindest teilweise umschließen.

## Claims

1. An air-intake system (2) for a multiple-cylinder internal-combustion engine, the air-intake system comprising at least one air collector (3) attachable to individual cylinders of the internal-combustion engine by means [of] intake manifolds (5) opening into an outer wall (4), and with pipe bends (14) arranged inside the air collector (3), **characterized in that** the pipe bends (14) in the air collector (13) [*sic*] are held freely mounted on a stationary shaft (13) so as to be pivotable into positions (S1 and S2), and in one position (S1) an exhaust opening (25) of the pipe bend (14) is immediately adjacent to an intake opening (26) of the intake manifold (5).

2. An air-intake system according to Claim 1, **characterized in that** in the other position (S2) the exhaust opening (25) is arranged at a distance from the intake opening (26).

3. An air-intake system according to Claim 1, **characterized in that** the air-collector (3) has a separation plane (E) in which a longitudinal axis (A) of the shaft (13) is situated.

4. An air-intake system according to Claim 3, **characterized in that** the pipe bends (14) are held on the shaft (13) by bearings (16) mounted directly on the wall (15) of [each] pipe bend.

5. An air-intake system according to Claim 3, **characterized in that** the shaft (13) is held in bearing blocks (17) adjacent to the separation plane (E) and arranged in planes (B) extending at right angles to the separation plane (E) and to the longitudinal axis (A) between adjacent pipe bends (14).

6. An air-intake system according to Claim 5, **characterized in that** the bearing blocks (17) are formed by indents (18) extending from the outer walls of the air collector (3) as far as the separation plane (E).

7. An air-intake system according to Claim 3, **characterized in that** the air collector (3) essentially comprises housing parts (lower part 6, cover 7) adjacent to the separation plane (E) by flange faces (8).

8. An air-intake system according to Claim 7, **characterized in that** the cover (7) extends immediately adjacent to the pipe bends (14).

9. An air-intake system according to Claim 1, **characterized in that** the pipe bends (14) enclose the shaft (13) at least in part.

## Revendications

1. Système d'admission d'air (2) pour un moteur à combustion interne à plusieurs cylindres, lequel système d'admission d'air comporte au moins un collecteur d'air (3) qui peut être raccordé à différents cylindres du moteur à combustion interne, au moyen d'une pipe d'admission (5) débouchant dans une paroi extérieure (4) ainsi que des coudes de tuyau (14) montés à l'intérieur du collecteur d'air (3), caractérisé en ce que les coudes de tuyau (14) dans le collecteur d'air (13) sont maintenus pivotants librement dans des positions (S1) et (S2), sur un arbre (13) fixe et en ce que dans une position (S1), un orifice de sortie (25) du coude de tuyau (14) s'applique directement contre un orifice d'entrée (26) de la pipe d'admission (5).

2. Système d'admission selon la revendication 1, caractérisé en ce que dans l'autre position (S2), l'orifice de sortie (25) est écarté de l'orifice d'entrée (26).

3. Système d'admission selon la revendication 1, caractérisé en ce que le collecteur d'air (3) présente un plan de séparation (E) dans lequel se trouve un axe longitudinal (A) de l'arbre (13).

4. Système d'admission selon la revendication 3, caractérisé en ce que les coudes de tuyau (14) sont maintenus sur l'arbre (13) par des paliers (16), montés directement sur une paroi (15) des coudes de tuyau.

5. Système d'admission selon la revendication 3, caractérisé en ce que l'arbre (13) est maintenu dans des supports d'appui (17), adjacents au plan de séparation (E), qui sont montés dans des plans (B) s'étendant perpendiculairement au plan de séparation (E) et à l'axe longitudinal (A), entre des coudes de tuyau (14) voisins.

6. Système d'admission selon la revendication 5, caractérisé en ce que les supports d'appui (17) sont formés par des parties en retrait (18) s'étendant depuis les parois extérieures du collecteur d'air (3) jusqu'au plan de séparation (E).

7. Système d'admission selon la revendication 3, caractérisé en ce que le collecteur d'air (3) est essentiellement constitué de parties de boîtier (partie inférieure 6, couvercle 7), qui sont adjacentes au plan de séparation (E), par des surfaces de bride (8).

8. Système d'admission selon la revendication 7, caractérisé en ce que le couvercle (7) s'étend directement à proximité des coudes de tuyau (14).

9. Système d'admission selon la revendication 1, caractérisé en ce que les coudes de tuyau (14) entourent au moins partiellement l'arbre (13).
